# EUROPÄISCHE PATENTSCHRIFT

(11) **EP 1 371 522 B1**
(45) Veröffentlichungstag und Bekanntmachung des Hinweises auf die Patenterteilung: **21.06.2017**
(21) Anmeldenummer: 03011519.0
(22) Anmeldetag: 21.05.2003
(51) Int. Cl.: G01D 11/28, G01D 13/28

(54) **Zeiger mit Hohlwelle**
Pointer with a hollow shaft
Indicateur à arbre creux

(30) Priorität: 11.06.2002 DE 10225946
(43) Veröffentlichungstag der Anmeldung: 17.12.2003
(73) Patentinhaber: paragon AG, 33129 Delbrück (DE)
(72) Erfinder: Moosmann, Thomas, 78737 Fluorn-Winzeln (DE); Grimm, Timo, 76135 Karlsruhe (DE)
(74) Vertreter: Lelgemann, Karl-Heinz

(56) Entgegenhaltungen:
- EP-A- 0 536 485
- EP-A- 0 919 420
- EP-A- 0 984 249
- DE-A1- 19 538 547
- DE-A1- 19 940 155
- JP-A- H08 193 852
- US-A- 4 380 043
- US-B1- 6 302 552

## Beschreibung

Die Erfindung betrifft ein analoges Zeigerinstrument, insbesondere für ein Kraftfahrzeug, mit einer auf einer drehbaren Welle gelagerten Zeigervorrichtung. Das Zeigerinstrument respektive die Zeigervorrichtung weist auf Mittel, mit denen ein Lichtstrahl aus einer Lichtquelle auskoppelbar und in die Zeigervorrichtung einkoppelbar ist, wobei ein Reflexionselement den eingekoppelten Lichtstrahl ablenkt, wobei eine Skala vorhanden ist, auf welcher der abgelenkte Lichtstrahl eine Leuchterscheinung hervorruft und wobei die Leuchterscheinung einen beleuchteten Zeiger bildet.

Derartige Zeigerinstrumente sind beispielsweise als Bestandteil der Armaturen in Kraftfahrzeugen in großer Vielfalt bekannt. Sie werden insbesondere über einen Schrittmotor angetrieben, wobei das Licht durch die Welle, die aus transparentem Kunststoff gebildet ist, geführt wird. Bei der transparenten Welle wird das Licht oder der Laserstrahl in die eine Stirnseite eingekoppelt und nach dem Austritt aus der Welle in das Reflexionselement gelenkt. Vom Reflexionselement gelangt das Licht zur Beleuchtung in einen Zeiger oder bildet als Strahl, der auf einer Skala reflektiert wird, selber eine Anzeige.

Die bekannten transparenten Wellen haben den großen Nachteil, dass unvermeidlich vorhandene Verunreinigungen oder Verarbeitungsfehler, wie beispielsweise Luftblasen im Material, oder Beschädigungen der Oberflächen zu Lichtverlusten durch Streuung führen. Der Strahl wird durch diese Störstellen aufgestreut und verliert entsprechend an Intensität. Bei Anzeigen, die mit Licht und insbesondere mit einem Laserstrahl arbeiten, steht die volle Lichtleistung somit nicht zur Verfügung.

Neben den genannten Zeigerinstrumenten sind auch Instrumente bekannt, bei denen eine Laserdiode auf der Welle gehalten ist und mitbewegt wird. Eine solche Einrichtung ist wegen der komplizierten Kontaktierung der Laserdiode vergleichsweise aufwendig. Außerdem kann die durch die Laserdiode erzeugte Wärme an dieser Stelle schlecht abgeführt werden, so dass Probleme durch Überhitzung auftreten können. Aus JP80193852 ist ein Zeigerinstrument bekannt, bei dem der Lichtstrahl in einer Hohlwelle geführt wird. Aus EP0919420 ist ein Zeigerinstrument bekannt, bei dem mittels eines Strahlteilers zwei Teilstrahlen erzeugt werden, so dass zwei schwenkbare Laserstrahlen zur Anzeige von zwei Parametern vorliegen. Aufgabe der vorliegenden Erfindung ist es daher, ein solches Zeigerinstrument zu schaffen, das konstruktiv einfach ist, sich kostengünstig herstellen lässt.

Diese Aufgabe wird durch ein Zeigerinstrument mit den kennzeichnenden Merkmalen des Anspruch 1 gelöst.

Der erfindungswesentliche Kerngedanke liegt darin, dass der Lichtstrahl vor seiner Umlenkung durch das Reflexionselement über eine gewisse Wegstrecke im freien Raum geführt wird. Diese, erfindungsgemäß materialfreie, Führung geschieht entlang und insbesondere parallel zur Welle, wobei das Merkmal "entlang" auch einen Winkel zwischen Welle und Lichtstrahl einschließen kann. Hier und im folgenden wird mit unter dem Begriff "führen" meist das freie Durchstrahlen des Raumes mit dem Lichtstrahl verstanden. Erfindungsgemäß ist es angestrebt, zwischen die Lichtquelle und das Reflexionselement möglichst wenig Material einzubringen, das die Lichtausbreitung stören könnte.

Der wesentliche Vorteil der Erfindung liegt auf der Hand: So verliert das Licht kaum an Intensität auf seinem Weg und beinahe die komplette Leistung der Lichtquelle steht für die Beleuchtung des Instrumentes zur Verfügung. Erfindungsgemäß wird das Licht nahezu verlustfrei in die Anzeigen oder auf die Anzeigen weitergeleitet. Die Kontaktierung der Lichtquelle ist entsprechend unkompliziert, weil die Lichtquelle, insbesondere eine Laserdiode, einfach auf einer Leiterplatte montiert werden kann. Zudem kann gerade bei Verwendung einer Laserdiode eine gute Kühlung gewährleistet werden, da die Laserdiode gut zugänglich ist.

Auch wenn die freie Führung des Lichtstrahles, die nicht unbedingt parallel zur Welle in das Reflexionselement erfolgen muss, auf verschiedene Arten möglich ist, so ist es am einfachsten, wenn die Welle von einem hohlen Zylinder gebildet ist, in dem der Lichtstrahl geführt ist. Dabei kann der Zylinder einen beliebigen Querschnitt aufweisen. Der Lichtstrahl geht dann ungestört durch die hohle Welle. Durch eine solche hohle Welle werden im Gegensatz zu den bislang verwendeten Wellen aus transparentem Kunststoff weit weniger Verluste erzeugt. Außerdem bietet sich die hohle Welle zur Strahlführung an, da sie die geometrische Symmetrieachse der drehbaren Zeigervorrichtung bildet. In dieser besonderen Ausführungsform bedeutet die Führung "entlang" der Welle einen Strahlengang koaxial zur Welle.

Beim Einsatz der hohlen Welle ist es vorteilhaft, das Reflexionselement als Teil einer einfachen Kappe auszubilden und diese auf den Kopf der Welle aufzusetzen. Solche Kappen, die einen Spiegel oder ein Umlenkprisma enthalten, lassen sich einfach und preiswert herstellen und montieren. Insbesondere können die Kappen mit einem vergleichsweise kleinen Durchmesser konzipiert werden, was zu einer Miniaturisierung des Instrumentes beiträgt.

Zur Lichterzeugung lassen sich alle bekannten Lichtquellen einsetzen. Wegen der kleinen Divergenz sind jedoch Laserstrahlen besonders zu bevorzugen. Diese werden vorteilhafter Weise von Laserdioden erzeugt, die heutzutage preiswert in einer hohen Qualität erhältlich sind. Der Vorteil eines Laserstrahls liegt darin, dass er wegen seiner geringen Divergenz gut zu führen ist und dass sich relativ einfach besondere Lichteffekte erzeugen lassen. So kann der Laserstrahl als Lichtpunkt oder-strich selber als Zeiger auf einer Skala eingesetzt werden. Das Licht der Lichtquelle kann auch von einer einzigen Lichtquelle über Fasern zu mehreren Verbrauchern geführt werden.

Wie dargelegt, wird der Zeiger von einer durch Reflexion des Lichtstrahls auf einer Skala hervorgerufenen Leuchterscheinung gebildet. Mit der Erfindung ist generell auch die Beleuchtung eines massiven Zeigers möglich.

Die Erfindung ist nicht auf Instrumente mit nur einer Zeigervorrichtung begrenzt. Erfindungsgemäß ist, wie beispielsweise bei Uhren, eine weitere Zeigereinrichtung vorgesehen, die koaxial zur ersten Zeigervorrichtung drehbar gelagert ist. Die Beleuchtung eines solchen Mehrfachinstrumentes ist auf einfache Weise möglich. Dabei ist es besonders einfach, wenn das auf dem Kopf der Welle aufsitzende Reflexionselement für das Licht teildurchlässig ist und einen Teil des Lichtstrahles zur Ausbildung des ersten Zeigers reflektiert und den verbleibenden Teil zur Einkopplung in die weitere Zeigervorrichtung durchlässt. Es wird durch konstruktive Maßnahmen lediglich dafür besorgt, dass der erste reflektierte Lichtstrahl durch ein Fenster austreten kann, das in die Welle der zweiten Zeigervorrichtung eingebracht ist. Zudem weist das erfindungsgemäße Instrument einen Schrittmotor auf, der die Welle vermittels eines am Umfang der Welle befindlichen Zahnrades dreht. Derartige Schrittmotor betriebene Instrumente sind hinlänglich bekannt und können einfach und preiswert hergestellt werden.

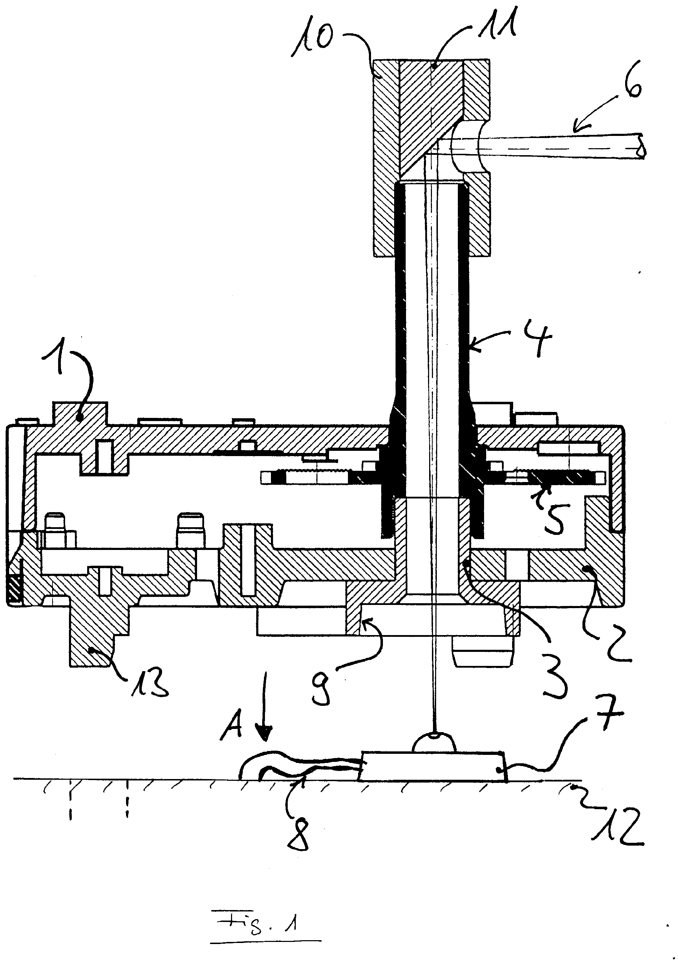

Ein Ausführungsbeispiel der Erfindung wird nachfolgend anhand der Figur näher beschrieben.

In der Figur ist ein Schrittmotor eines analogen Zeigerinstrumentes dargestellt, der ein aus Oberschale 1 und Unterschale 2 zusammengesetztes Gehäuse aufweist. Die "Innereien" des Motors, wie beispielsweise Rotor und Stator sind nicht dargestellt. Das Gehäuse bildet entsprechende Bohrungen und Aufnahmen aus, um Lager aufnehmen und Wellen führen zu können. In dem Gehäuse ist in einem hohlen Lager 3 eine drehbare Welle 4 gehalten, die aus der Oberschale 1 hinausragt. Die Welle wird vermittels eines am Umfang befindlichen Zahnrades 5 von dem nicht dargestellten Schrittmotor rotiert.

In dem dargestellten Ausführungsbeispiel weist die Zeigervorrichtung einen Lichtstrahl 6 als beleuchteten Zeiger auf. Der Lichtstrahl 6 wird ausgekoppelt aus einer Laserdiode 7, die über zwei Drähte 8 kontaktiert ist. Die Laserdiode 7 ist auf einer Leiterplatte 12 gehalten. Der Schrittmotor wird mit seinem Gehäuse auf die Leiterplatte aufgesetzt (Pfeil A), so dass die Laserdiode 7 in eine entsprechende Aufnahme 9 hineinreicht. Das Gehäuse wird mit einem Zapfen 13 in eine Bohrung in der Leiterplatte eingesteckt. Erfindungsgemäß wird der Lichtstrahl ungehindert entlang der Welle 4 in einem Stück freien Raumes geführt. Der freie Raum ist in diesem Fall das Innere der Welle 4, die als hohler Zylinder ausgebildet ist. Im Inneren der Welle 4 wird der Lichtstrahl koaxial geführt, ohne die Wand zu berühren. Die Welle 4 kann als einfaches Spritzteil mit angeformtem Zahnrad 5 ausgebildet sein.

Am Ende der Welle tritt der Lichtstrahl 6 aus dem Zylinder aus und wird in die Zeigervorrichtung eingekoppelt. Die Zeigervorrichtung weist ein Reflexionselement auf, das Teil einer auf den Kopf der Welle 4 aufgesetzten Kappe 10 ist. Die Ablenkung des Strahles um etwa 90° wird in diesem Fall von einem Spiegel 11 bewerkstelligt. Die Zeigervorrichtung wird somit in diesem Fall von der Kappe 10 und dem daraus abgelenkte Strahl 6 gebildet, der eine Skala beleuchtet. Statt der Kappe 10 könnte auch eine Zeigerfahne auf die Welle 4 aufgesetzt werden.

Wie aus dem Ausführungsbeispiel ersichtlich, bildet der Schrittmotor mit der durchstrahlten Hohlwelle und der darauf befindlichen Kappe eine bauliche Einheit, die als kompaktes Instrument auf die Platine 12 aufgesetzt werden kann.

## Patentansprüche

1. Analoges Zeigerinstrument mit einer auf einer drehbaren Welle (4) gelagerten Zeigervorrichtung, aufweisend Mittel, mit denen ein Lichtstrahl (6) von einer Lichtquelle (7) auskoppelbar und in die Zeigervorrichtung einkoppelbar ist, ein Reflexionselement (11), das den eingekoppelten Lichtstrahl (6) ablenkt, eine Skala, auf der der abgelenkte Lichtstrahl (6) eine Leuchterscheinung hervorruft, wobei der in die Zeigervorrichtung eingekoppelte Lichtstrahl (6) vor seiner Umlenkung durch das Reflexionselement (11) materialfrei über eine gewisse Wegstrecke im freien Raum geführt wird, nachdem er als aus der Lichtquelle (7) ausgekoppelter Lichtstrahl (6) durch einen von der drehbaren Welle (4) gebildeten hohlen Zylinder koaxial in einem Stück freien Raums geführt und in die Zeigervorrichtung eingekoppelt wurde, und wobei der Zeiger der Zeigervorrichtung von der durch Reflexion des Lichtstrahls (6) auf der Skala hervorgerufenen Leuchterscheinung gebildet ist, wobei das Zeigerinstrument mindestens eine weitere Zeigervorrichtung aufweist, die koaxial zur ersten Zeigervorrichtung drehbar gelagert ist, wobei das Reflexionselement (11) teildurchlässig ist und einen Teil des Lichtstrahls (6) reflektiert und den verbleibenden Teil zur Einkopplung in die weitere Zeigervorrichtung durchlässt, wobei in eine Welle der weiteren Zeigervorrichtung ein Fenster eingebracht ist, durch das der reflektierte Lichtstrahl (6) austreten kann, und wobei die Welle (4) der ersten Zeiger-vorrichtung von der Abtriebswelle eines Schrittmotors gebildet wird, der die Welle (4) der ersten Zeigervorrichtung vermittels eines am Umfang der Welle (4) befindlichen Zahnrads (5) dreht.

2. Zeigerinstrument nach einem der vorherigen Ansprüche, **dadurch gekennzeichnet, daß** der Lichtstrahl (6) von einem Laser, insbesondere von einer Laserdiode (7), erzeugt ist

3. Zeigerinstrument nach einem der vorherigen Ansprüche, **dadurch gekennzeichnet, daß** das Reflexionselement (11) Teil einer Kappe (10) ist, die auf den Kopf der Welle (4) aufgesetzt ist.

## Claims

1. An analogue pointer instrument having a pointer device mounted on a rotatable shaft (4), exhibiting means with which a light beam (6) from a light source (7) can be decoupled and coupled into the pointer device, a reflexion element (11) which deflects the coupled light beam (6), a scale on which the deflected light beam (6) produces a luminous effect, wherein the light beam (6) coupled in the display device is guided before its deflection by the reflection element (11) in a material-free manner over a certain route in free space, after it has been guided as a light beam (6) decoupled from the light source (7) through a hollow cylinder formed by the rotatable shaft (4) coaxially in a section of free space and coupled in the pointer device, and wherein the pointer of the pointer device is formed by the luminous effect caused by reflection of the light beam (6) on the scale, wherein the display instrument has at least one further pointer device which is mounted rotatably coaxially to the first pointer device, wherein the reflection element (11) is partially permeable and reflects part of the light beam (6) and lets the remaining part pass for coupling with the further pointer device, wherein a window is introduced into a shaft of the further pointer device, through which the reflected light beam (6) can leave and wherein the shaft (4) of the first pointer device is formed by the drive shaft of the step motor which turns the shaft (4) of the first pointer device by means of a gear wheel (5) located on the periphery of the shaft (4).

2. The pointer instrument according to one of the preceding claims, **characterized in that** the light beam (6) is produced by a laser, in particular by a laser diode (7).

3. The pointer instrument according to one of the preceding claims, **characterized in that** the reflection element (11) is part of a cap (10) which is fitted to the head of the shaft (4).

## Revendications

1. Instrument indicateur analogique avec un dispositif indicateur monté sur un arbre rotatif (4), présentant des moyens avec lesquels un faisceau lumineux (6) peut être découplé d'une source lumineuse (7) et être couplé dans le dispositif indicateur, un élément de réflexion (11) qui dévie le faisceau lumineux (6) couplé, une graduation sur laquelle le faisceau lumineux (6) dévié provoque un phénomène lumineux, dans lequel, avant sa déviation par l'élément de réflexion (11), le faisceau lumineux (6) couplé dans le dispositif indicateur est guidé de manière exempte de matière sur un certain trajet dans l'espace libre après avoir été guidé de manière coaxiale en tant que faisceau lumineux (6) découplé de la source lumineuse (7) à travers un cylindre creux formé par l'arbre rotatif (4) dans une partie d'espace libre et avoir été couplé dans le dispositif indicateur, et dans lequel l'indicateur du dispositif indicateur est formé par le phénomène lumineux provoqué par la réflexion du faisceau lumineux (6) sur la graduation, dans lequel l'instrument indicateur présente au moins un autre dispositif indicateur monté de façon rotative coaxialement au premier dispositif indicateur, dans lequel l'élément de réflexion (11) est partiellement transparent et réfléchit une partie du faisceau lumineux (6) et laisse passer la partie résiduelle pour le couplage dans l'autre dispositif indicateur, dans lequel une fenêtre est ménagée dans un arbre de l'autre dispositif indicateur à travers laquelle fenêtre le faisceau lumineux (6) réfléchi peut sortir, et dans lequel l'arbre (4) du premier dispositif indicateur est formé par l'arbre entraîné d'un moteur pas à pas qui fait tourner l'arbre (4) du premier dispositif indicateur à l'aide d'une roue dentée (5) se trouvant sur la périphérie de l'arbre (4).

2. Instrument indicateur selon l'une des revendications précédentes, **caractérisé en ce que** le faisceau lumineux (6) est généré par un laser, en particulier par une diode laser (7).

3. Instrument indicateur selon l'une des revendications précédentes, **caractérisé en ce que** l'élément de réflexion (11) est une partie d'un capuchon (10) posé sur la tête de l'arbre (4).
